# EUROPÄISCHE PATENTSCHRIFT

(11) **EP 1 990 533 B1**
(45) Veröffentlichungstag und Bekanntmachung des Hinweises auf die Patenterteilung: **18.11.2009**
(21) Anmeldenummer: 08103753.3
(22) Anmeldetag: 29.04.2008
(51) Int. Cl.: F02M 63/02, F02D 41/38, B60T 1/00

(54) **Kraftstoffeinspritzvorrichtung mit hydropneumatischem Speicher**
Fuel injection system with hydropneumatic reservoir
Système d'injection de carburant doté d'un accumulateur hydropneumatique

(30) Priorität: 11.05.2007 DE 102007022222
(43) Veröffentlichungstag der Anmeldung: 12.11.2008
(73) Patentinhaber: ROBERT BOSCH GMBH, 70442 Stuttgart (DE)
(72) Erfinder: Wohlhaupter, Juergen, 70806 Kornwestheim (DE); Hernier, Markus, 70839 Gerlingen (DE)

(56) Entgegenhaltungen:
- DE-A1- 10 246 594
- DE-C1- 19 942 846
- US-A1- 2004 250 795

## Beschreibung

### Stand der Technik

Die Erfindung geht aus von einer Kraftstoffeinspritzvorrichtung nach der Gattung des Patentanspruchs 1.

Dieselmotoren mit zentralem Hochdruck-Druckspeicher (Common Rail (CR)) haben in den letzten Jahren eine starke Marktdurchsetzung erreicht. Neue Modelle der Automobilhersteller werden fast nur noch mit CR-Systemen ausgerüstet. Zur Erzeugung des hohen Einspritzdruckes von bis zu 2000 bar wird eine Hochdruckpumpe eingesetzt, die prinzipbedingt immer mehr Kraftstoff fördert als für die Einspritzung aktuell benötigt wird. Überschüssiger Kraftstoff fließt deshalb aus dem zentralen Druckspeicher über ein Druckregelventil zurück in den Tank.

Zur Energieeinsparung werden in der Kraftfahrzeugtechnik hybride Antriebskonzepte angeboten, wobei Antriebe mit einem Verbrennungsmotor sowie einem oder mehreren Elektromotoren verbreitet sind. Zur Energiespeicherung werden Batterien eingesetzt, allerdings hat die elektrochemische Energiespeicherung in einer Batterie eine Reihe von Nachteilen, wie z.B. hohes Gewicht und hoher Preis, Selbstentladung, erhebliche Lade- und Entladeverluste, Temperaturabhängigkeit, begrenzter Lade-/Entladebereich und besonders die eingeschränkte Lebensdauer, die im Schnitt bei etwa 5 Jahren und teilweise auch niedriger liegt. Andere Methoden zur Energiespeicherung sind zwar bekannt, haben sich aber am Markt nicht durchgesetzt.

Aus DE 102 46 594 ist eine Kraftstoffeinspritzanlage mit einem Common-Rail mit integriertem Energiespeicher bekannt.

### Offenbarung der Erfindung

Erfindungsgemäß wird die Energie des bisher in den Tank rückfließenden überschüssigen Kraftstoffs, der entsprechend dem aktuellen Druck im Common Rail zwischen etwa 500 bar bis 2000 bar auf Normaldruck entspannt wird, genutzt, um den Druck in einem hydraulischen Energiespeicher (Hydrospeicher oder Hydraulikspeicher) zu erhöhen und Energie zu speichern. Bei hydropneumatischen Speichern wird dazu Arbeit an einem Gas verrichtet. Mit den Komponenten der Kraftstoffeinspritzvorrichtung - Hochdruckpumpe, Common Rail - wird Kraftstoff verdichtet, der den Druck im Hydrospeicher erhöht und damit Energie speichert.

Bei einem hydropneumatischen Speicher wird der unter Druck stehende Kraftstoff in einen mit Gas (in der Regel Stickstoff) gefüllten Druckbehälter gepresst. Das Gas wird dadurch komprimiert und steht zu einem späteren Zeitpunkt als "gespeicherte Energie" zur Verfügung. Ein solcher hydropneumatischer Speicher weist eine geringe Temperaturabhängigkeit und eine geringe Selbstentladung auf und hat geringe Ladeverluste. Die Herstellungskosten sind deutlich niedriger im Vergleich zur Batterie, und die Lebensdauer ist um Faktoren größer. Durch Nutzung vorhandener Komponenten der Kraftstoffeinspritzvorrichtung sind die Mehrkosten für die Zusatzaggregate zur Energiespeicherung und den Antrieb geringer als bei elektrochemischen Lösungen und Batterien als Energiespeicher. Man unterscheidet mehrere Bauformen von Hydraulikspeichern, wie z.B. Membranspeicher, Blasenspeicher, Kolbenspeicher oder federbelastete Hydraulikspeicher.

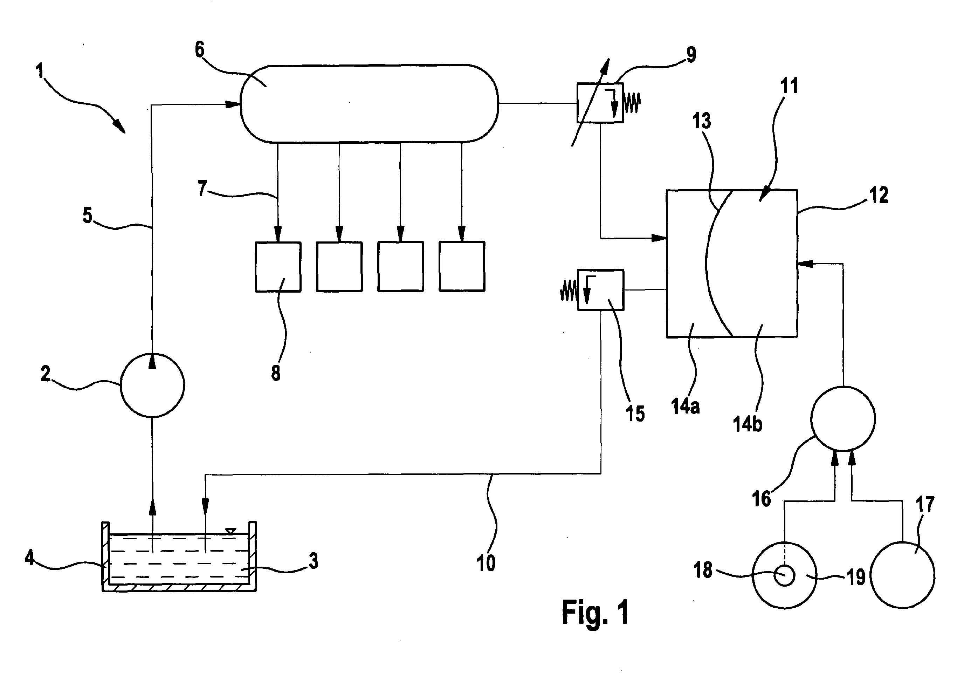

Weitere Vorteile und vorteilhafte Ausgestaltungen des Gegenstands der Erfindung sind der Beschreibung, der Zeichnung und den Ansprüchen entnehmbar.

### Kurze Beschreibung der Zeichnung

Die erfindungsgemäße Kraftstoffeinspritzvorrichtung ist in der Zeichnung dargestellt und wird in der nachfolgenden Beschreibung näher erläutert. Die in der Zeichnung gezeigten Merkmale sind rein schematisch und nicht maßstäblich zu verstehen. Die einzige Figur zeigt schematisch die erfindungsgemäße Kraftstoffeinspritzvorrichtung mit einem zentralen Druckspeicher und einem hydropneumatischen Speicher.

### Ausführungsform der Erfindung

Bei der in der Figur gezeigten Kraftstoffeinspritzvorrichtung **1** eines Fahrzeugs fördert eine Hochdruckpumpe **2** Kraftstoff **3** aus einem Vorratstank **4** mit hohem Druck über eine Förderleitung **5** in einen zentralen Druckspeicher (Hochdruck-Common Rail) **6.** Der Kraftstoff wird aus dem zentralen Druckspeicher 6 über Hochdruckleitungen **7** den einzelnen Einspritzventilen (Injektoren) **8** zugeführt, die in einen Brennraum einer zu versorgenden Brennkraftmaschine ragen. Der im zentralen Druckspeicher 6 jeweils herrschende Druck - je nach Anforderung zwischen ca. 400 und ca. 2000 bar - wird über ein Druckregelventil (regelbares Überdruckventil) **9** eingestellt, über das überschüssiger Kraftstoff über eine Rückleitung **10** zurück in den Vorratstank 4 fließt.

Zwischen Druckregelventil 9 und Vorratstank 4 ist in der Rückleitung 10 ein hydropneumatischer Speicher **11** vorgesehen, der hier beispielhaft als Blasenspeicher ausgeführt ist. Der hydropneumatische Speicher 11 weist einen druckfesten Behälter **12** auf, der durch eine Speicherblase (Gummiblase) **13** in zwei voneinander getrennte Räume **14a*,* 14b** geteilt ist. Der eine Raum 14a ist an die Rückleitung 10 und über ein Überdruckventil **15** an den Vorratstank 4 angeschlossen, während sich in dem anderen Raum 14b ein Gas (in der Regel Stickstoff) befindet. Der unter Druck stehende Kraftstoff wird in den hydropneumatischen Speicher 11 gepresst und komprimiert dadurch das Gas, das zu einem späteren Zeitpunkt als "gespeicherte Energie" zur Verfügung steht. Anstatt wie bisher beim Stand der Technik den in den Vorratstank 4 rückfließenden Kraftstoff über das Druckregelventil 9 auf Normaldruck zu entspannen, wird der zur Verfügung stehende Kraftstoff-Differenzdruck zur Erhöhung des im hydropneumatischen Speicher 11 herrschenden Druckes genutzt. Mit dem Raum 14b des hydropneumatischen Speichers 11 ist ein Hydraulikmotor **16,** auch Hydromotor genannt, verbunden, der die Aufgabe hat, den im hydropneumatischen Speicher 11 herrschenden Gasdruck in mechanische Arbeit umzuwandeln. Der Hydraulikmotor 16 kann z.B. als Axialkolbenmotor oder Radialkolbenmotor ausgeführt sein.

Wird das Fahrzeug abgebremst, dann geht dessen Verbrennungsmotor **17** in den Zustand "Schiebebetrieb" über. Der Verbrennungsmotor 17 erhält keine Kraftstoffeinspritzung, und das Reibmoment des Verbrennungsmotors 17 wirkt zusätzlich als Bremsleistung. In diesem Zustand kann die Hochdruckpumpe 2 mit maximaler Förderleistung betrieben werden, um einen möglichst hohen Druckaufbau im Speicher 11 zu erreichen. Die Pumpenarbeit wirkt zusätzlich als Bremsenergie, wodurch - insgesamt gesehen - das Reibmoment und damit die Bremswirkung erhöht werden.

Eine weitere Möglichkeit für die Umwandlung von Bremsenergie ist der Einsatz des Hydraulikmotors 16. Mit geeigneter Ansteuerung kann er Verdichtungsarbeit in den Druckspeicher 11 verrichten. Eine intelligente Bremse kann so gesteuert werden, dass ein Teil der Bremsenergie durch Radbremsen des Fahrzeugs aufgebracht wird, der andere Teil durch die Verdichtungsarbeit des Hydraulikmotors 16. Im letzteren Fall wird der Hydromotor 16 durch den Antriebsstrang des Verbrennungsmotors 17 oder durch die Achse **18** der Fahrzeugräder **19** angetrieben und dadurch Verdichtungsarbeit in den Druckspeicher 11 verrichtet. Dieser Betriebszustand ergibt sich somit fast immer, wenn das Fahrzeug abgebremst wird.

Mit der im hydropneumatischen Speicher 11 gespeicherten Energie kann über den Hydromotor 16 auch eine Drehbewegung erzeugt werden, die geeignet ist, um z.B. den Verbrennungsmotor des Fahrzeugs zu starten. Dies ist besonders für einen Start/Stopp-Betrieb des Fahrzeugs ideal. Im Ergebnis wird also die überschüssige Energie aus der Hochdruckerzeugung gespeichert und steht für einen späteren Motorstart wieder zur Verfügung. Bei entsprechender Größe des hydropneumatischen Speichers 11 ist sogar Rangieren des Fahrzeugs möglich; zum Ein-/Ausparken im Stadtverkehr, zum Fahren in bzw. aus der Garage, Öffnen von Türen etc.

## Patentansprüche

1. Kraftstoffeinspritzvorrichtung (1), insbesondere eines Fahrzeugs, mit einem zentralen Druckspeicher (6) und einem Druckregelventil (9), über das der Druck im zentralen Druckspeicher (6) eingestellt wird,
**dadurch gekennzeichnet,**
**dass** ein Hydraulikspeicher (11) über das Druckregelventil (9) mit dem zentralen Druckspeicher (6) verbunden ist.

2. Kraftstoffeinspritzvorrichtung nach Anspruch 1, **dadurch gekennzeichnet, dass** der Hydraulikspeicher (11) in einer vom zentralen Druckspeicher (6) zu einem Kraftstoff-Vorratstank (4) verlaufenden Rückleitung (10) angeordnet ist.

3. Kraftstoffeinspritzvorrichtung nach Anspruch 1 oder 2, **dadurch gekennzeichnet, dass** ein Hydraulikmotor (16) an den Hydraulikspeicher (11) angeschlossen ist.

4. Kraftstoffeinspritzvorrichtung nach Anspruch 3, **dadurch gekennzeichnet, dass** der Hydraulikmotor (16) mit dem Antriebsstrang eines Verbrennungsmotors (17) eines Fahrzeugs und/oder mit der Achse (18) der Räder (19) eines Fahrzeugs zum Verrichten von Verdichtungsarbeit in den Hydraulikspeicher (11) verbindbar ist.

5. Kraftstoffeinspritzvorrichtung nach einem der vorhergehenden Ansprüche, **dadurch gekennzeichnet, dass** der Hydraulikspeicher (11) ein hydropneumatischer Speicher, insbesondere ein Membranspeicher, ein Blasenspeicher, ein Kolbenspeicher oder ein federbelasteter Hydraulikspeicher, ist.

## Claims

1. Fuel injection device (1), in particular of a vehicle, having a central pressure accumulator (6) and having a pressure regulating valve (9) which serves to set the pressure in the central pressure accumulator (6),
**characterized**
**in that** a hydraulic accumulator (11) is connected to the central pressure accumulator (6) via the pressure regulating valve (9).

2. Fuel injection device according to Claim 1,
**characterized in that** the hydraulic accumulator (11) is arranged in a return line (10) which runs from the central pressure accumulator (6) to a fuel storage tank (4).

3. Fuel injection device according to Claim 1 or 2, **characterized in that** a hydraulic motor (16) is connected to the hydraulic accumulator (11).

4. Fuel injection device according to Claim 3,
**characterized in that** the hydraulic motor (16) can be connected to the drive train of an internal combustion engine (17) of a vehicle and/or to the axle (18) of the wheels (19) of a vehicle in order to perform compression work in the hydraulic accumulator (11).

5. Fuel injection device according to one of the preceding claims, **characterized in that** the hydraulic accumulator (11) is a hydropneumatic accumulator, in particular a diaphragm accumulator, a bladder accumulator, a piston accumulator or a spring-loaded hydraulic accumulator.

## Revendications

1. Dispositif d'injection de carburant (1), en particulier d'un véhicule, comprenant un accumulateur de pression central (6) et une soupape de régulation de la pression (9), par le biais de laquelle la pression dans l'accumulateur de pression central (6) est ajustée,
**caractérisé en ce**
**qu'**un accumulateur hydraulique (11) est connecté à l'accumulateur de pression central (6) par le biais de la soupape de régulation de la pression (9).

2. Dispositif d'injection de carburant selon la revendication 1, **caractérisé en ce que** l'accumulateur hydraulique (11) est disposé dans une conduite de retour (10) s'étendant depuis l'accumulateur de pression central (6) jusqu'à un réservoir de carburant (4).

3. Dispositif d'injection de carburant selon la revendication 1 ou 2, **caractérisé en ce qu'**un moteur hydraulique (16) est raccordé à l'accumulateur hydraulique (11).

4. Dispositif d'injection de carburant selon la revendication 3, **caractérisé en ce que** le moteur hydraulique (16) peut être connecté à la transmission d'entraînement d'un moteur à combustion interne (17) d'un véhicule et/ou à l'essieu (18) des roues (19) d'un véhicule pour effectuer un travail de compression dans l'accumulateur hydraulique (11).

5. Dispositif d'injection de carburant selon l'une quelconque des revendications précédentes, **caractérisé en ce que** l'accumulateur hydraulique (11) est un accumulateur hydropneumatique, notamment un accumulateur à membrane, un accumulateur à vessie, un accumulateur à piston ou un accumulateur hydraulique sollicité par piston.
